# EUROPEAN PATENT SPECIFICATION

(11) **EP 3 272 223 B1**
(45) Date of publication and mention of the grant of the patent: **16.06.2021**
(21) Application number: 16764585.2
(22) Date of filing: 09.02.2016
(51) Int. Cl.: A23G 1/00, A23G 1/30, A23L 11/00, A23J 3/16, A23G 1/44, A23L 11/30

(54) **CHOCOLATE-LIKE FOOD**
SCHOKOLADEÄHNLICHES NAHRUNGSMITTEL
ALIMENT DE TYPE CHOCOLAT

(30) Priority: 18.03.2015 JP 2015054388; 25.12.2015 JP 2015253633
(43) Date of publication of application: 24.01.2018
(73) Proprietor: Fuji Oil Holdings Inc., Osaka 598-8540 (JP)
(72) Inventor: YOSHIMURA, Kazuto, Izumisano-shi Osaka 598-8540 (JP); FUJITA, Tomoko, Izumisano-shi Osaka 598-8540 (JP); NAKAMURA, Yasushi, Izumisano-shi Osaka 598-8540 (JP)
(74) Representative: Becker & Kurig Partnerschaft Patentanwälte PartmbB
(86) International application number: PCT/JP2016/053829
(87) International publication number: WO 2016/147754

(56) References cited:
- WO-A1-02/17733
- JP-A- S4 962 674
- JP-A- S5 668 356
- JP-A- H10 323 155
- JP-A- S58 134 963
- JP-A- S59 166 038
- JP-A- 2002 233 321
- JP-A- 2004 236 501
- JP-A- 2007 082 510
- JP-A- 2009 142 222
- JP-A- 2011 167 145
- US-A- 4 054 679
- US-A- 4 054 679
- US-A- 5 100 679
- US-A1- 2004 161 512
- US-A1- 2004 170 743
- US-A1- 2008 008 816
- US-A1- 2014 356 510
- US-A1- 2014 356 510

## Description

### BACKGROUND OF THE INVENTION

### 1. Field of the Invention

The present invention relates to a method for producing a chocolate-like food comprising a soy protein material, and a method for improving taste of a chocolate-like food containing the soy protein material.

### 2. Description of Related Art

Elderly people may suffer from low nutrition because they tend to take less food in diet with cause of age as their appetite decreases. Especially, the insufficient intake of protein causes reduction of muscles, and may increase the risk of bone fracture. Therefore, it is desired to develop various high-protein foods that can help to take in more protein in all dietary situations.

Chocolate-like food, typically chocolate, is widely consumed globally because of its good flavor. Chocolate is often produced mainly from cacao mass, sugar, cocoa butter, milk powder and the like. In milk chocolate, the content of protein is about 7.4% by weight.

For example, JP 2009-142222 A, WO 2007/116819 A1, and JP 2000-270775 A are applications using a soy protein material in chocolate-like food.

JP S57-22649 A relates to a process for preparing a separated protein, and describes a process for producing a soy protein isolate having a nitrogen solubility index (NS1) of about 20 or less. A step of heating at a pH of about 4.5 to 5.8 is described herein, and non-aqueous cream filling is described as use of such a protein material. Moreover, WO 2002/028197 A1 describes a method for producing soy protein, which is characterized by neutralizing soy protein slurry and the like under an acidic condition after heating. It is described in this patent that the objective of such a production method is to reduce odor of soy.

US 2004 0161512 A1 discloses soy-containing dough-based and baked products containing deflavored soy protein material.

### SUMMARY OF THE INVENTION

### Problem to be Solved by the Invention

The present invention is directed to providing a chocolate-like food which can be enjoyably eaten and which is enriched with protein so that more soy protein can be consumed in all dietary situations.

### Means for Solving the Problem

Originally, the inventors of the present invention made intensive studies on the objective of strengthening soy protein in various foods, but at the beginning, it was unclear what the specific problem is.

In the study aimed at improving the protein content in various foods, chocolate-like food was first selected as a target. This is because chocolate-like food is a widely accepted food globally, as it does not require much chewing when being eaten, and can be eaten even by elderly people whose chewing force has declined.

JP 2009-142222 A is an application relating to chocolate containing soy peptide. It is described that the peptide used in this application is characterized by hydrolysis with thermolysin. However, the preparation of the soy peptide is complex, and the cost is often increased. In addition, as the enzymatic decomposition brings about a unique flavor, it may be difficult to be used as a general-purpose material.

WO 2007/116819 A1 is an application relating to production of an oily food which solves the problem of unfavorable taste by setting the particle size to a specific value. However, when containing an edible material having a particle size of 1 mm, the oily food shows a crispy taste, which is different from the taste of chocolate-like food that melts in mouth.

JP 2000-270775 A relates to a method for producing a chocolate sweet including a calcination process, which uses a heat-coagulable protein as a raw material. The taste of the produced sweet is different from that of usual chocolate.

From the compositional characteristics of the chocolate-like food, it is relatively easy to add other materials to the food besides the original raw materials. However, the inventors found that when actually preparing chocolate-like food containing the soy protein according to the prior art, the problem of flavor and taste of the food might arise in some cases. Specifically, in the case of eating the chocolate-like food containing the soy protein according to the prior art, there is a sense that the food sticks in the mouth due to the soy protein component, which is the root cause that worsens the flavor and taste of the chocolate-like food.

The inventors thus made further studies.

As a result, it is found that by appropriately adjusting pH from heat sterilization to a drying step when a soy protein material is prepared, it is possible to reduce the sticky sensation in mouth when the soy protein material is used in the chocolate-like food. Thus, the present invention is completed.

In other words, the present invention is directed to a method for producing a chocolate-like food as recited in claim 1, and a method for improving taste of a soy protein-containing chocolate like food according to claim 4. Dependent claims are directed to some beneficial embodiments. The present disclosure serves a better understanding of the claimed invention.

Moreover, even in the prior art, methods for producing a protein material including a heating step using steam blowing type under an acidic condition are disclosed in JP S57-22649 A and WO 2002/028197 A1.

The protein isolate in JP S57-22649 A is not suitable because it is rough.

WO 2002/028197 A1 does not disclose any use of a protein material in chocolate-like food. Moreover, referring to the examples, neutralization is performed after heating under an acidic condition, and spray drying is further performed after heat sterilization.

Since there is a risk of bacterial contamination after the neutralization step, the heat sterilization is usually performed before the drying step. However, when such heat sterilization over 100°C is performed twice, if the protein material is used in the chocolate-like food of the present invention, a sticky sensation in the mouth may occur.

### [Effect of the Invention]

According to the present invention, it is easy to obtain a chocolate-like food which is enriched with protein. The produced chocolate-like food has a reduced sticky sensation in the mouth, and has a good flavor and taste.

### DESCRIPTION OF THE EMBODIMENTS

The chocolate category is an example of the chocolate-like food of the present invention. The term "chocolate category" used herein means not only chocolate, quasi-chocolate, and chocolate food prescribed by the Japan Chocolate Fair Trade Conference and Chocolate Food Fair Trade Conference, but also those using fats and oils as essential ingredients, and having a mixture of secondary raw materials such as sugar, milk powder, cacao materials (cacao mass, cocoa, cocoa butter), fruit juice powders, fruit powders, flavoring agents, emulsifiers, spices, coloring agents and the like at an arbitrary ratio.

Examples of fats and oils that can be used include soy oil, cottonseed oil, corn oil, safflower oil, olive oil, palm oil, rapeseed oil, rice bran oil, sesame oil, kapok oil, coconut oil, palm kernel oil, Babassu oil, milk fat, lard, fish oil, whale oil and the like, and hardened oils, fractionated oils and transesterified oils thereof.

Moreover, the flavor of chocolate is not limited to sweet chocolate, milk chocolate and white chocolate, which are mainly composed of cacao raw material, milk powder and sugar. Other varieties such as coffee flavor, caramel flavor, matcha flavor, 5 fruit flavor, vegetable flavor, and salty flavors also naturally fall within the scope.

The soy protein material of the present invention is a material prepared by using soy as the raw material. In addition, the present invention is directed to enriching the protein content in chocolate, so the preferred protein content in the soy protein material is 60% or more by weight, more preferred 65% or more by weight, and more preferred 70% or more by weight. By setting the protein content to a preferred value, the original objective of enriching the protein in the chocolate-like food can be easily achieved.

The soy-derived material in the present invention is soy or defatted soy, and more preferred defatted soy. The defatted soy is readily available.

In the preparation of the soy protein material to be used in the present invention, the process starts from adding water to the soy-derived material and extracting the soy protein. Next, the defatted soy is used as an example of the soy-derived material in the following description.

Extraction of soy protein from the defatted soy is carried out by using water having 10 to 13 times of volume of the defatted soy. At this time, with the extraction of protein, pH may reduce gradually. By adding alkali appropriately, the extraction is performed through adjusting pH to 6.5-7. In addition, the extraction of protein is promoted by properly stirring.

After adding water to the defatted soy, most soy protein is extracted by stirring for about 30 minutes.

After that, insoluble components such as Okara (soy pulp) are removed. To remove the insoluble components, a filter press or a centrifugal separator may be appropriately used. However, it is more efficient to use a centrifugal separator.

Next, acid is added to the supernatant from which the insoluble component has been removed, and pH is adjusted to 4.2 to 4.7. By setting pH in such a range, the soy protein will have acid precipitation. Then, the acid-precipitated soy protein is separated by using the centrifugal separator or the like. Moreover, the soy protein separated here is simply referred to as a curd. The steps before the preparation of the curd are the same as normal preparation steps for separating the soy protein.

Next, water is added to the curd in a manner that the solid content is 7-13% by weight, and acid is added in a manner that pH is 2-4. At this time, the more preferred pH is 2.5-3.5, and the most preferred pH is 3.0-3.5. By setting pH to an appropriate value, the obtained soy protein material is a good material for use in the chocolate-like food, and the sticky sensation in the mouth is reduced.

Moreover, at pH within the above range, the soy protein is hardly dissolved and is in a suspension state.

Any acid can be used as long as it is an acid that can be used for food. For example, the acid may be an inorganic acid such as hydrochloric acid, sulfuric acid, phosphoric acid or an organic acid such as acetic acid, citric acid, lactic acid, tartaric acid, malic acid, gluconic acid, and fumaric acid. Phosphoric acid, citric acid, and malic acid are especially preferred because they can produce a chocolate-like food with little odor of soy and salty taste.

Next, the suspension is supplied to a steam-blowing heater and heated at 100-150°C for 4-20 seconds. At this time, the more preferred temperature is 105-135°C, more preferred 110-130 °C, and most preferred 120-130 °C. Moreover, the more preferred heating time is 5-14 seconds, and more preferred 5-9 seconds. By using the soy protein material obtained by heating in the preferred condition, chocolate-like food without the sticky sensation in the mouth can be produced. In addition, by conducting heating in such condition, the state with a small number of bacteria can be achieved.

After the steam-blowing heating is conducted, pH is adjusted to 6-7.5. The more preferred pH is 6-7, and more preferred 6-6.5. By using the soy protein material obtained in the preferred pH condition, chocolate-like food without the sticky sensation in the mouth can be produced.

Here, the preferred pH adjustment is continuous pH adjustment in an in-line manner. The continuous pH adjustment in the in-line manner can prevent contamination caused by bacteria.

The continuous pH adjustment in the in-line manner is to directly add alkali to a pipe through which the heated protein suspension passes, and if necessary, to make the alkali to pass through a pipe with a baffle plate, which is referred to as an in-line mixer, so as to set the target pH by mixing.

Although the device of this type is known, in the preparation of the soy protein material, the usage mode in the present invention is unknown.

In the present invention, after pH is adjusted to 6-7.5, the temperature must stays at 0-80°C until the drying step. The more preferred temperature is 20-80°C, and more preferred 30-80°C.

After pH is adjusted to 6-7.5, the temperature is set to staying at the above appropriate temperature until the drying step. Thus, the sticky sensation in the mouth is reduced when the material used in the chocolate-like food.

Therefore, by adjusting pH in the in-line manner, the present invention can be well implemented.

The alkali is preferably sodium hydroxide or potassium hydroxide, and potassium hydroxide is particularly preferable because the odor of soy or salty taste is less.

After pH is adjusted to 6-7.5, the material is subjected to the drying step. Here, as a drying method, the preferred is spray drying from the perspective of efficiency.

After the drying step, the soy protein material of the present invention can be obtained.

In the present invention, NSI (Nitrogen soluble index) refers to a nitrogen solubility index. That is, it is expressed by the ratio (wt%) of water-soluble nitrogen (crude protein) to the total amount of nitrogen based on a specific method, and in the present invention, it is a value measured based on the following method.

### (Method for measuring NSI)

Add 100 ml of water to 2.0 g of the sample, stir for extraction at 40°C for 60 minutes, centrifuge at 1,400xg for 10 minutes to obtain a supernatant 1. Add 100 ml of water again to the remaining precipitate, stir for extraction at 40°C for 60 minutes, centrifuge at 1,400xg for 10 minutes to obtain a supernatant 2. The supernatants 1 and 2 are put together, and further add water to 250 ml. After filtration with No. 5A filter paper, the nitrogen content of the filtrate is measured with the Kjeldahl method. Meanwhile, the nitrogen content in the sample is measured with the Kjeldahl method, and NSI is defined as the ratio of nitrogen (water-soluble nitrogen) recovered as the filtrate to the total nitrogen in the sample in wt%.

In the soy protein material of the present invention, the NSI is preferably 20-80, more preferably 20-50, and more preferably 20-40. Using the protein material with the NSI in the preferred range, the chocolate-like food with reduced sticking feeling in the mouth can be obtained.

The soy protein material according to the present invention is characterized in that the NSI range is relatively wide, and in particular, it is characterized in that roughness or the like does not occur even if the NSI is low. Therefore, it can be used for solving the problem.

In addition, in the soy protein material prepared with a method other than the present invention, if the NSI is reduced, the material is rough in most cases, and is hard to crush. The present invention does not show such properties.

Next, the method for preparing chocolate-like food is described.

The preparation of chocolate-like food can basically adopt the conventional method. That is, after raw materials such as sugar, milk powder, and cacao mass are mixed, they are refined by using a roller or the like. Preferably, the soy protein material is also mixed with other raw materials and refined by using the roller or the like. Then, the refined mixture is heated and refined for preparation of the chocolate-like food.

The chocolate-like food of the present invention must contain the 5-20% of the protein material by weight. The content is preferably 7-18% by weight, and more preferably 10-17% by weight. By containing an appropriate amount of the protein material, the protein can be easily ingested when eating the chocolate-like food.

Next, implementations of the present invention are described in detail in the following by using examples.

### Examples

### Preparation of O soy protein curd

### (Test Example 1)

12 kg of 40°C warm water was added to 1 kg of defatted soy (produced by Fuji Oil Co., Ltd.), and pH was adjusted to 7.0 by using IN NaOH.
2. Protein was extracted by stirring at 5000 rpm for 1 hour using a homomixer (manufactured by Tokushu Kika Kogyo Co., Ltd.).
3. Soy pulp was removed by centrifugal separation (1500 G, 10 minutes) to obtain defatted soymilk.
4. The pH was adjusted to 4.5 by using IN HCl, the protein card was precipitated and recovered by using a centrifugal separator to obtain the soy protein curd.

### Preparation of the O soy protein material

### Implementation Study Examples 1-8, Comparative Study Examples 1-4

The soy protein material was prepared according to conditions in Table 1 and "the method for preparing a soy protein material".

Water content, ash content, crude protein mass (CP) and NSI of the obtained soy protein material were measured.

The water content was measured with the normal-pressure heating drying method (105°C, 4 hours), the ash content was measured with the direct ashing method (600°C, 4 hours, further heating in the case of insufficient ashing), the crude protein mass was measured with the Kjeldahl method, and the NSI was measured with the method described in the specification. The ash content and the crude protein mass (CP) were converted to unit dry weight.

The measured values were also listed in Table 1.

### Method for preparing a soy protein material

1. Water was added to the soy protein curd obtained in Test Example 1, to obtain a suspension having a solid content of 10% by weight.
2. Acid (1N hydrochloric acid) or alkali (1N sodium hydroxide) was added to adjust pH of the suspension to values listed in Table 1(The pH was referred to as "pH during heating").
3. Steam-blowing heating was carried out under conditions listed in Table 1.
4. pH was adjusted to values listed in Table 1(The pH was referred to as "pH after adjustment").
5. The product was supplied to a spray dryer and made into powder.

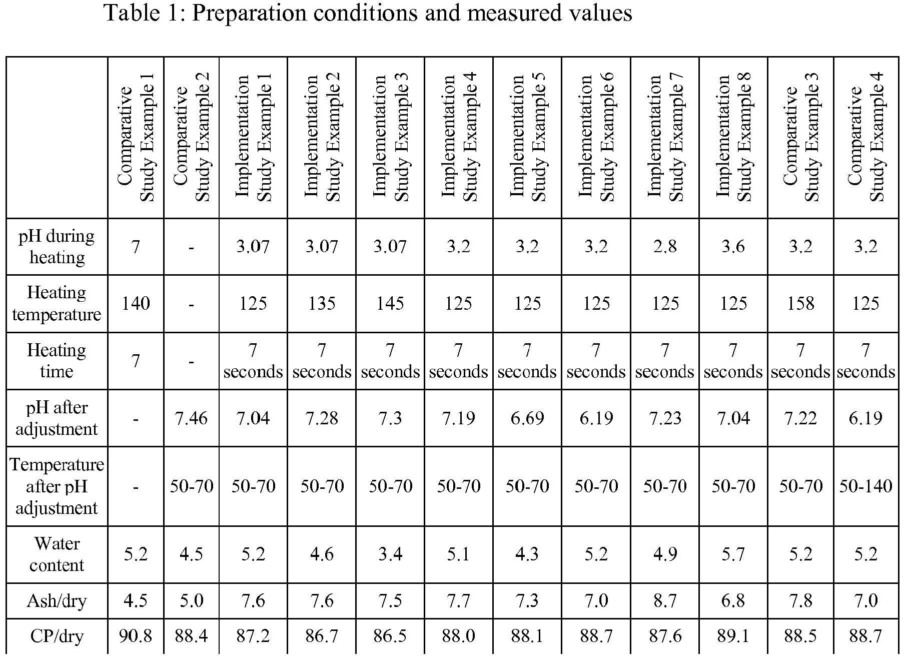

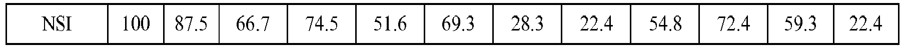

In Comparative Study Example 1, step 4, that is, the pH adjustment step, in the "method for preparing a soy protein material" was not performed.

In Comparative Study Example 2, step 3, that is, the heating step, in the "method for preparing a soy protein material" was not performed.

The "temperature after pH adjustment" was the "temperature from the step after pH was adjusted to 6-7.5 to the step before drying".

Only in Comparative Study Example 4, the steam-blowing heating at 140°C was carried out after pH was adjusted to 6-7.5.

### ○ Study 1

### Examples 1-8, Comparative Examples 1-4

The sample prepared in "○ preparation of the soy protein material" was used to prepare the chocolate-like food according to the formulation in Table 2. The method for preparing a chocolate-like food was in accordance with "○ method for preparing an chocolate-like food".

The obtained "chocolate-like food" was evaluated according to a "sensory evaluation method of a chocolate-like food", and the results were listed in Table 3.

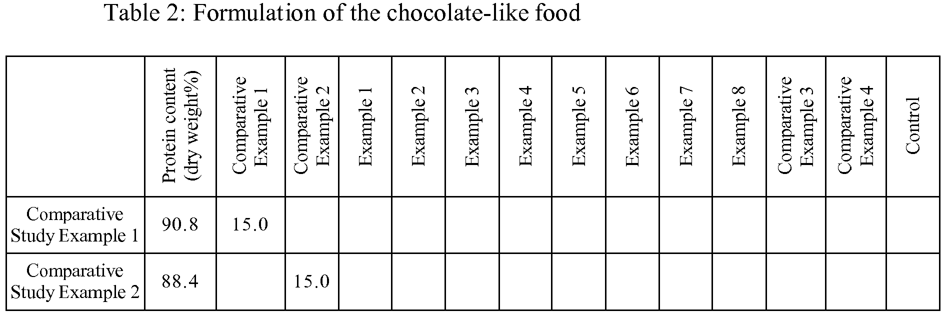

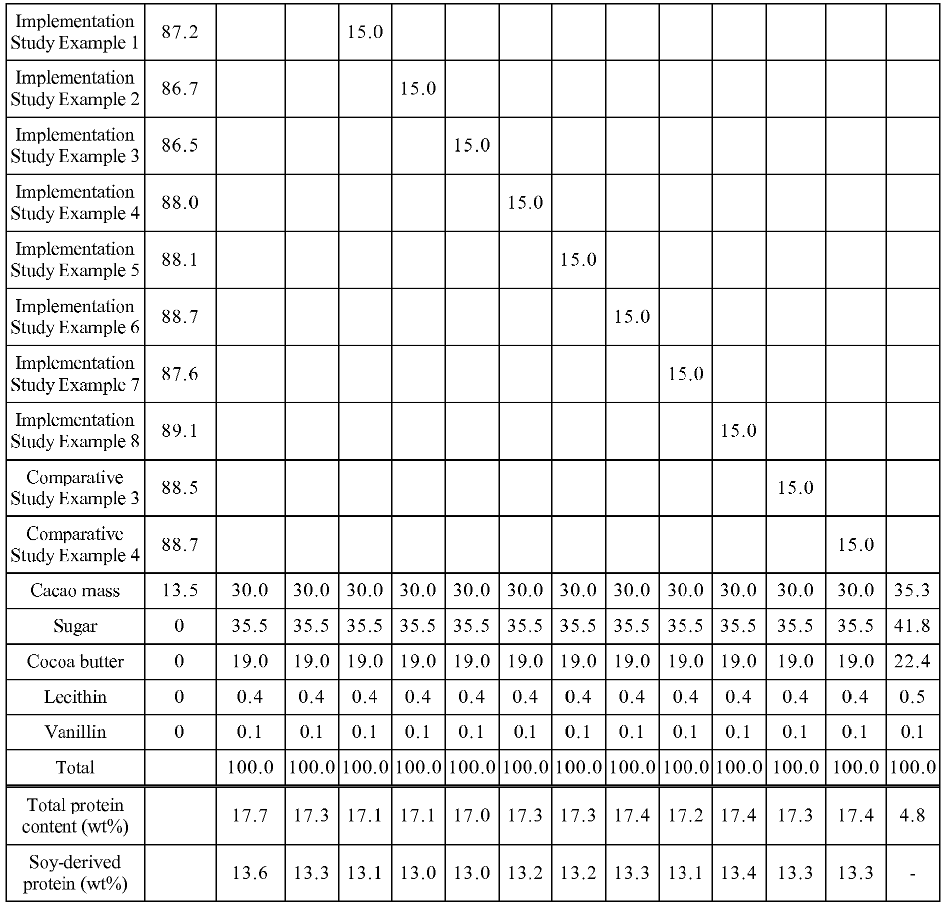

### ○ Method for preparing a chocolate-like food

### Production of roll flakes

1. Cacao mass, sugar, a part of cocoa butter, and vanillin were melted and processed according to the formulation in Table 2.
2. The input material to a roll refiner was prepared by stirring in a mixer (AM 30 manufactured by Aicohsha Manufacturing Co., Ltd.) to a dough state (8 to 10 minutes).
3. The input material to the roller refiner was refined by using the roll refiner (manufactured by BUHLER Co., Ltd., "Three-roll mill SDY-300") to obtain roll flakes. The particle size of the roll flakes was 21 µm.

### Conching

4. The obtained roll flakes were subjected to dry conching at 60°C for 180 minutes on a conching machine (manufactured by Shinagawa Machinery Works Co., Ltd.).
5. The remaining cocoa butter was added, and liquid conching was performed for 60 minutes after lecithin was added.
6. Tempering was performed, let flow in a mold, and solidification at 5°C was performed.
7. Place in a room at 20-22°C for 1-3 hours.

### ○ Sensory evaluation method of chocolate-like food

In comparison with the control, 5 panelists conducted blind evaluation and consultation, and gave scores to items including sticky sensation in the mouth, flavor, and taste according to the following criteria.
Three or more points: pass.
Five points: better than the control.
Four points: equivalent to the control.
Three points: slightly worse than the control, but the difference being judged negligible.
Two points: obviously worse than the control.
One point: greatly worse than the control.

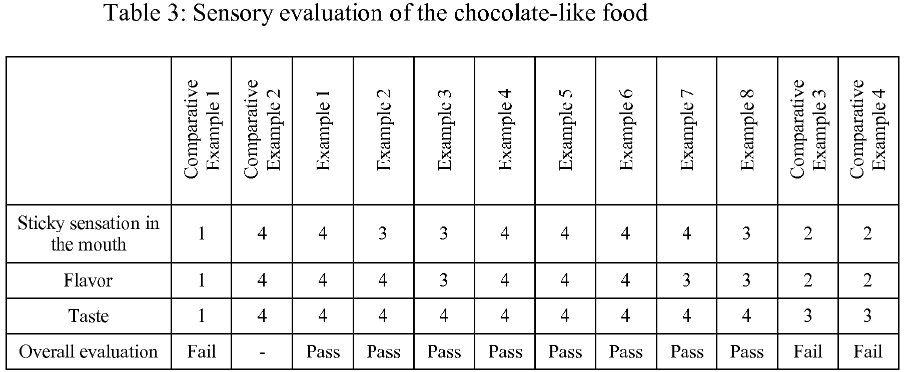

In the consultation by all panelists, Example 6 was judged to be the best.

Comparative Example 2 was not judged to pass or fail because the number of bacteria was large.

Comparative Example 4 was judged to fail because it has the sticky sensation in the mouth.

### Consideration

When the soy protein material heated and prepared under the conditions of the present invention was used, it was possible to obtain a chocolate-like food which passed both sensory evaluation and bacterial counts.

### ○ Study 2: Types of acid and alkali used in preparation of the soy protein material

### Implementation Study Examples 9-12, Examples 9-12

The soy protein material was prepared under the conditions of Implementation Study Example 6, except that the acid used in Step 2 of the "method for preparing a soy protein material" was replaced by phosphoric acid, citric acid and malic acid in Implementation Study Examples 9-11 respectively. However, for citric acid and malic acid, the addition amount is 1.5% of the amount of the solid in the suspension, and then pH was adjusted to 3.2 by using hydrochloric acid.

Similarly, the alkali used in Step 4 was changed to potassium hydroxide to prepare the soy protein material in Implementation Study Example 12.

The soy protein material thus obtained was used to prepare the chocolate-like food according to the "○ method for preparing a chocolate-like food" (Examples 9-12). The obtained "chocolate-like food" was evaluated according to the "sensory evaluation method of a chocolate-like food", and evaluation points for items including the odor of soy and the salty taste were given. Moreover, the sample of Implementation Study Example 6 was used as the control. The results were listed in Table 4.The overall flavor and taste features were represented by comments.

**Table 4: Types of acid and alkali, and evaluation results of the chocolate food**

| | Example 9 | Example 10 | Example 11 | Example 12 |
|---|---|---|---|---|
| Protein material used | Implementation Study Example 9 | Implementation Study Example 10 | Implementation Study Example 11 | Implementation Study Example 12 |
| Acid used | Phosphoric acid | Citric acid | Malic acid | Hydrochloric acid |
| Alkali used | Sodium hydroxide | Sodium hydroxide | Sodium hydroxide | Potassium hydroxide |
| Odor of soy | 5 | 5 | 5 | 4 |
| Salty taste | 5 | 5 | 5 | 5 |
| Overall evaluation | Pass | Pass | Pass | Pass |

When the acid was changed, compared with the case in which the hydrochloric acid was used, the odor of soy and the salty taste were reduced, and the chocolate-like food was better.

When the alkali was changed to potassium hydroxide, compared with the case in which the sodium hydroxide was used, the salty taste was reduced, and the chocolate-like food was better.

## Claims

1. A method for producing a chocolate-like food, wherein the chocolate-like food comprises 5 to 20% by weight of a soy protein material prepared by using a method comprising:
heat treating a suspension containing soy protein at 100-150 °C for 4-20 seconds at pH 2.0-4.0, then adjusting to pH 6.0-7.5 by addition of alkali, and drying and powdering,
wherein from the heat treating step onwards, a temperature stays at 80 °C or lower until the drying step.

2. The method for producing a chocolate-like food according to claim 1, wherein, in the method to produce the soy protein material, the suspension containing soy protein is heat treated at 110-130 °C for 5-9 seconds at pH 2.5-3.5, then adjusted to pH 6.0-6.5 by addition of the alkali, and dried and powdered.

3. The method for producing a chocolate-like food according to claim 2, wherein, in the method to produce the soy protein material, the pH adjustment by addition of the alkali is continuous adjustment in-line.

4. A method for improving taste of a soy protein-containing chocolate-like food using a soy protein material prepared by using a method comprising:
heat treating a suspension containing soy protein at 100-150 °C for 4-20 seconds at pH 2.0-4.0, then adjusting to pH 6.0-7.5 by addition of alkali, and drying and powdering,
wherein from the heat treating step onwards, a temperature stays at 80 °C or lower until the drying step.

5. The method for improving taste of a soy protein-containing chocolate-like food according to claim 4, wherein, in the method to produce the soy protein material, the suspension containing soy protein is heat treated at 110-130 °C for 5-9 seconds at pH 2.5-3.5, then adjusted to pH 6.0-6.5 by addition of the alkali, and dried and powdered.

6. The method for improving taste of a soy protein-containing chocolate-like food according to claim 5, wherein, in the method to produce the soy protein material, the pH adjustment by addition of the alkali is continuous adjustment in-line.

## Patentansprüche

1. Verfahren zur Herstellung eines schokoladenartigen Nahrungsmittels, wobei das schokoladenartige Nahrungsmittel 5 bis 20 Gew.-% eines Sojaproteinmaterials umfasst, das unter Verwendung eines Verfahrens hergestellt wurde, das umfasst:
Wärmebehandeln einer Suspension, die Sojaprotein enthält bei 100-150 °C für 4-20 Sekunden bei einem pH-Wert von 2,0 - 4,0, anschließendes Einstellen auf einen pH-Wert von 6,0-7,5 durch Zugabe von Alkali, und Trocknen und Pulverisieren,
wobei ab dem Wärmebehandlungsschritt eine Temperatur bei 80 °C oder niedriger bis zu dem Trocknungsschritt bleibt.

2. Verfahren zur Herstellung eines schokoladenartigen Nahrungsmittels gemäß Anspruch 1, wobei bei dem Verfahren, um das Sojaproteinmaterials herzustellen, die Suspension Sojaprotein enthält, bei 110-130 °C für 5-9 Sekunden bei einem pH-Wert von 2,5-3,5 wärmebehandelt wird, dann auf einen pH-Wert von 6,0-6,5 eingestellt wird durch Zugabe des Alkalis und getrocknet und pulverisiert wird.

3. Verfahren zur Herstellung eines schokoladenartigen Nahrungsmittels gemäß Anspruch 2, wobei bei dem Verfahren, um das Sojaproteinmaterials herzustellen, die pH-Wert-Einstellung durch Zugabe des Alkalis eine kontinuierliche Einstellung in Übereinstimmung ist.

4. Verfahren zur Verbesserung des Geschmacks eines Sojaprotein-enthaltenden schokoladenartigen Nahrungsmittels unter Verwendung eines Sojaproteinmaterials, das hergestellt wird, unter Verwendung eines Verfahrens, das umfasst
Wärmebehandeln einer Suspension, die Sojaprotein enthält, bei 100-150 °C für 4-20 Sekunden bei einem pH-Wert von 2,0-4,0, dann Einstellen auf einen pH-Wert von 6,0-7,5 durch Zugabe von Alkali, und Trocknen und Pulverisieren,
wobei ab dem Wärmebehandlungsschritt eine Temperatur bei 80 °C oder niedriger bis zu dem Trocknungsschritt bleibt.

5. Verfahren zur Verbesserung des Geschmacks eines sojaprotein-enthaltenden schokoladenartigen Nahrungsmittels gemäß Anspruch 4, wobei in dem Verfahren, um das Sojaproteinmaterial herzustellen, die Suspension Sojaprotein enthält, bei 110-130 °C für 5-9 Sekunden bei einem pH-Wert von 2,5-3,5 wärmebehandelt wird, dann auf einen pH-Wert von 6,0-6,5 eingestellt wird durch Zugabe des Alkalis und getrocknet und pulverisiert wird.

6. Verfahren zur Verbesserung des Geschmacks eines Sojaprotein-enthaltenden schokoladenartigen Lebensmittels gemäß Anspruch 5, wobei in dem Verfahren, um das Sojaproteinmaterial herzustellen, die pH-Wert-Einstellung durch Zugabe des Alkalis eine kontinuierliche Einstellung in Übereinstimmung ist.

## Revendications

1. Procédé de production d'un aliment de type chocolat, dans lequel l'aliment de type chocolat comprend 5 à 20 % en poids d'une matière de protéine de soja préparée en utilisant un procédé comprenant les étapes consistant à :
traiter à la chaleur une suspension contenant une protéine de soja à 100 à 150 °C durant 4 à 20 secondes à pH 2,0 à 4,0, puis ajuster à pH 6,0 à 7,5 par l'addition d'alcali, et sécher et réduire en poudre,
du traitement à la chaleur à la suite, une température restant à 80 °C ou moins jusqu'à l'étape de séchage.

2. Procédé de production d'un aliment de type chocolat, dans lequel, dans le procédé pour produire la matière de protéine de soja, la suspension contenant la protéine de soja est traitée à la chaleur à 110 à 130 °C durant 5 à 9 secondes à pH 2,5 à 3,5, puis ajustée à pH 6,0 à 6,5 par l'addition d'alcali, puis séchée et réduite en poudre.

3. Procédé de production d'un aliment de type chocolat selon la revendication 2, dans lequel, dans le procédé pour produire la matière de protéine de soja, l'ajustement du pH par l'addition d'alcali est un ajustement continu en ligne.

4. Procédé d'amélioration du goût d'un aliment de type chocolat contenant une protéine de soja en utilisant une matière de protéine de soja préparée en utilisant un procédé comprenant les étapes consistant à :
traiter à la chaleur une suspension contenant une protéine de soja à 100 à 150 °C durant 4 à 20 secondes à pH 2,0 à 4,0, puis ajuster à pH 6,0 à 7,5 par addition d'alcali, et sécher et réduire en poudre,
de l'étape de traitement à la chaleur à la suite, une température restant à 80 °C ou moins jusqu'à l'étape de séchage.

5. Procédé d'amélioration du goût d'un aliment de type chocolat contenant une protéine de soja selon la revendication 4, dans lequel, dans le procédé pour produire la matière de protéine de soja, la suspension contenant la protéine de soja est traitée à la chaleur à 110 à 130 °C durant 5 à 9 secondes à pH 2,5 à 3,5, puis ajustée à pH 6,0 à 6,5 par l'addition d'alcali, et séchée et réduite en poudre.

6. Procédé d'amélioration du goût d'un aliment de type chocolat contenant une protéine de soja selon la revendication 5, dans lequel, dans le procédé pour produire la matière de protéine de soja est, l'ajustement du pH par l'addition d'alcali est un ajustement continu en ligne.
